Europäisches Patentamt

European Patent Office

Office européen des brevets

(11) Veröffentlichungsnummer: **0 439 746 A1**

(12) # EUROPÄISCHE PATENTANMELDUNG

(21) Anmeldenummer: 90123917.8

(22) Anmeldetag: 12.12.90

(51) Int. Cl.⁵: **B25H 1/00**, B25H 7/00,
B23B 47/28

(30) Priorität: 30.01.90 DE 4002592

(43) Veröffentlichungstag der Anmeldung:
07.08.91 Patentblatt 91/32

(84) Benannte Vertragsstaaten:
AT BE CH DE DK ES FR GB IT LI NL SE

(71) Anmelder: RUKO GmbH
PRÄZISIONSWERKZEUGE
Robert-Bosch-Strasse 7-9
W-7038 Holzgerlingen(DE)

(72) Erfinder: Gellert, Achim c/o Fam. Wutschig
Ernst-Moritz-Arndt-Strasse 1
W-6242 Kronberg/Ts.(DE)

(74) Vertreter: Zapfe, Hans, Dipl.-Ing.
Am Eichwald 7, Postfach 20 01 51
W-6056 Heusenstamm 2 (Rembrücken)(DE)

(54) Handwerkzeug zum Kennzeichnen und/oder Bearbeiten von geradlinigen Werkstücken konstanten Querschnitts.

(57) Ein Handwerkzeug zum Kennzeichnen und/oder Bearbeiten von geradlinigen Werkstücken konstanten Querschnitts besitzt eine Grundplatte (1) und einen damit verbundenen Revolver (9) mit mindesten zwei Führungseinrichtungen (27, 28, 29, 30, 31, 32, 33) für den Einsatz von Kennzeichnungs- (7, 8) und/oder Bearbeitungswerkzeugen (Bohrern). Die Grundplatte (1) besitzt zwei abstehenden Anschläge (2) mit zueinander parallelen Berührungslinien für das Werkstück. Zwischen den Anschlägen ist ein Zwischenraum für das Einführen des Werkstücks vorhanden, und mittig zwischen den Berührungslinien befindet sich eine Durchbrechung für das Durchführen des Kennzeichnungs- (7, 8) und/oder Bearbeitungswerkzeuges. Der Revolver (9) ist mit der Grundplatte (1) auf der den Anschlägen (2) gegenüberliegenden Seite durch ein Drehgelenk (12) und eine Indexier- Einrichtung verbunden und trägt auf einem zum Drehgelenk konzentrischen Teilkreis die Führungseinrichtungen für die Kennzeichnungs- und Bearbeitungswerkzeuge. Mindestens eine der Führungseinrichtungen (29, 30, 31) ist als Bohrhülse (29a, 30a, 31a) ausgeführt.

FIG.1

# HANDWERKZEUG ZUM KENNZEICHNEN UND/ODER BEARBEITEN VON GERADLINIGEN WERKSTÜCKEN KONSTANTEN QUERSCHNITTS

Die Erfindung betrifft ein Handwerkzeug zum Kennzeichnen und/oder Bearbeiten von geradlinigen Werkstücken konstanten Querschnitts.

Bei den Werkstücken handelt es sich um Rohre mit kreisringförmigen und rechteckigen bzw. quadratischen Querschnitten, Vollstäbe mit entsprechender Oberfläche, Profile beliebigen Querschnitts bespielsweise in U-, L- und I-Form, um Leisten sowie um Platten, wenn es darum geht, deren Schmalseiten zu kennzeichnen und/oder zu bearbeiten, also beispielsweise Platten an den Schmalseiten mit sog. Zapfen oder Dübeln zu versehen. Als Werkstoffe für die Werkstücke kommen Metall, insbesondere Leichtmetall und Kupfer, Kunststoff, Holz und deren Ersatzstoffe infrage.

Es ist bekanntermaßen schwierig, Rohre zu kennzeichnen bzw. zu markieren, um dann eine genau radial ausgerichtete Bohrung zu erzeugen. Die Kennzeichnung kann durch einen Zeichenstift, eine Reißnadel oder dgl. erfolgen, die Markierung durch einen Körner. Aber selbst dann ist es schwierig, eine radiale Bohrung einzubringen, d.h. zu verhindern, daß der Bohrer seitlich "verläuft", weil die Bohrstelle, bezogen auf die Bohrerachse, stets auf der höchsten Linie des Rohres liegt.

Aber auch beim Bohren von Profilen ist es schwierig, zumindest aber zeitraubend, zunächst eine Mittellinie anzureißen und in dieser eine Bohrung niederzubringen.

Erst recht ist es zeitraubend, in der Reihenfolge "Anreißen-Körnen-Bohren" zu verfahren.

Der Erfindung liegt daher die Aufgabe zugrunde, ein Handwerkzeug anzugeben, mit dem Werkstücke der oben gannnten Art und Beschaffenheit und in einem Bereich unterschiedlicher Querabmessungen genau entlang ihrer Mittellinie bzw. parallel zu ihrer Achse gekennzeichnet und/oder bearbeitet werden können.

Die Lösung der gestellten Aufgabe erfolgt erfindungsgemäß durch ein Handwerkzeug mit folgenden Merkmalen:

a) mit einer Grundplatte mit zwei davon abstehenden Anschlägen mit zur Grundplatte senkrecht stehenden und zueinander parallelen Berührungslinien für das Werkstück, zwischen denen ein Zwischenraum für das Einführen des Werkstücks vorhanden ist, und mit einer mittig zwischen den Berührungslinien angeordnete Durchbrechung für das Hindurchführen eines Kennzeichnungs- und/oder Bearbeitungswerkzeuges, und mit

b) einem mit der Grundplatte auf der den Anschlägen gegenüberliegenden Seite durch ein Drehgelenk und eine Indexier-Einrichung verbundenen Revolver, der auf einem zum Drehgelenk konzentrischen Teilkreis mindesten zwei Führungseinrichtungen mit zur Grundplatte senkrechten Achsen (A1 , A2, ....) aufweist, die im Bereich der Durchbrechung in der Mitte zwischen den Berührungslinien stillsetzbar sind und in die jeweils ein Kennzeichnungs- und/oder Bearbeitungswerkzeug einsetzbar ist.

Der Erfindungsgegenstand ist ein Universalwerkzeug .Beim Gebrauch wird so verfahren, daß das Werkstück mit seiner Längsachse parallel zur Grundplatte zwischen die Anschläge eingeführt wird, worauf das Werkzeug so weit von Hand verschwenkt wird, bis die beiden Anschläge beiderseits der Werkstückachse am Werkstück anliegen. Die Grundplatte bleibt hierbei immer in linienförmiger oder flächiger Berührung mit dem Werkstück, und die Schwenkbewegung erfolgt um eine zur Auflagelinie oder -fläche senkrechte fiktive Schwenkachse, die im Ergebnis die Achse des jeweils ausgewählten Kenzeichnungs- oder Bearbeitungswerkzeugs ist. In dieser Lage befindet sich die Achse des jeweils vorgewählten Kennzeichnungs- oder Bearbeitungswerkzeugs genau in der Mitte des Werkstückquerschnitts.

Auf diese Weise ist es möglich, nacheinander und/oder alternativ die einzelnen Kennzeichnungs- und Bearbeitungswerkzeuge zielgenau zum Einsatz zu bringen. Nunmehr wird das ausgewählte Kennzeichnungs- oder Bearbeitungswerkzeug durch die Durchbrechung in der Grundplatt gegen das Werkstück verschoben, und der Kennzeichnungs- oder Bearbeitungsvorgang wird ausgeführt.

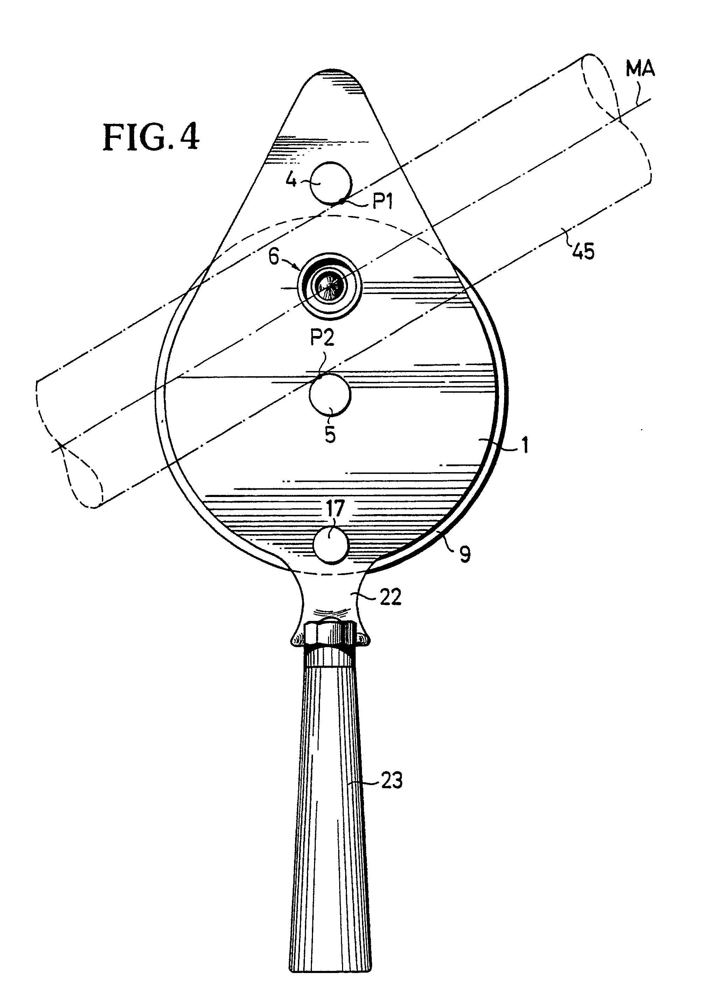

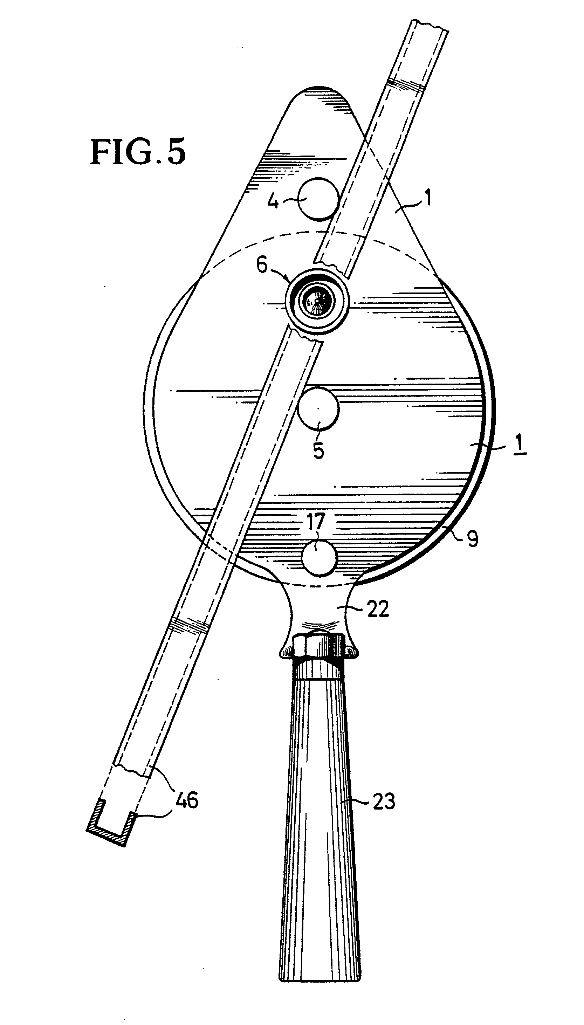

Bei langgestreckten Werkstücken, die an mehreren Stellen bearbeitet werden sollen, ist es möglich, das Werkzeug in Längsrichtung des Werkstücks auf dessen Oberfläche zu verschieben und die einzelnen Kennzeichnungs- und/oder Bearbeitungsvorgänge zu wiederholen. Der Vorgang wird anhand der Figuren 4 und 5 noch näher erläutert.

Die Erfindung kann dadurch verwirklicht werden, daß in mindestens eine der Führungseinrichtungen ein Zeichenstift, ein Anreißstift oder ein Körner eingesetzt ist.

Soweit das Werkzeug zum zielgenauen Bohren verwendet wird, kann es auch als "Bohrlehre" bezeichnet werden.

Es ist dabei in besonders vorteilhafter Weise auch möglich, mindestens eine der anderen Führungseinrichtungen als Bohrhülse auszubilden.

Es ist weiterhin von Vorteil , wenn die als Bohrerführungen ausgebildeten Führungseinrichtungen entsprechend den unterschiedlichen Bohrdurchmessern abgestufte Innendurchmesser aufweisen.

Um eine genaue axiale Führung der Werkzeuge zu ermöglichen und dennoch eine leichte Auswechselbarkeit der Kennzeichnungs-und Markierungswerkzeuge zu gewährleisten, ist es mit besonderem Vorteil möglich, in der mindestens einen Führungseinrichtung für den Zeichenstift und/oder für den Anreißstift eine axial verschiebbare Spannzange für die Halterung des jeweiligen Stiftes vorzusehen, wobei vorteilhaft die Spannzange gegen die Wirkung einer Druckfeder in Richtung auf die Grundplatte verschiebbar gelagert ist.

Um Kennzeichnungs- oder Markierungswerkzeuge unterschiedlichen Durchmessers einsetzen zu können, ist vorteilhaft die Spannzange auswechselbar in ihrer Führungseinrichtung gelagert.

Um dabei eine ungewollte Verstellung der Vorrichtung zu vermeiden, ist zwischen Grundplatte und Revolver eine Feststellvorrichtung angeordnet, die als verspannbare Klemmbacke ausgebildet sein kann, durch die der Revolver an die Grundplatte anpreßbar ist. Zusätzlich kann eine Index-Rastung (z.B. eine Kugelsperre) vorhanden sein.

Mit ganz besonderem Vorteil besitzt die Feststellvorrichtung eine Gewindespindel mit einem Formkörper, der mittels der Gewindespindel spielfrei in jeweils eine, einer jeden Führungseinrichtung zugeordnete Ausnehmung des jeweils anderen Teils (Grundplatte oder Revolver) einführbar ist.

Zwecks leichter Handhabung ist die Grundplatte zweckmäßig mit einem Handgriff versehen, der bevorzugt radial zur Achse der Drehlagerung ausgerichtet an der Grundplatte befestigt ist und die Gewindespindel und deren Drehknopf enthält.

Weitere vorteilhafte Ausgestaltungen des Erfindungsgegenstandes ergeben sich aus den übrigen Unteransprüchen.

Das Werkzeug kann vollständig aus Metall, z.B. Stahl und/oder Leichtmetall-Druckguß, oder teilweise aus Metall und Kunststoff bestehen, wobei die auf Verschleiß beanspruchten Teile aus Metall, vorzugsweise aus gehärtetem Stahl, bestehen.

Zwei Ausführungsbeispiele des Erfindungsgegenstandes werden nachfolgend anhand der Figuren 1 bis 6 näher erläutert.

Es zeigen:

Fig. 1          Eine perspektivische Ansicht eines ersten Ausführungsbespiels eines vollständigen Werkzeugs von schräg oben,

Fig. 2          eine Draufsicht auf den Gegenstand nach Figur 1 von oben,

Fig. 3          eine teilweise geschnittene Seitenansicht des Gegenstandes nach den Figuren 1 und 2,

Fig. 4 und 5    Unteransichten des Werkzeugs nach den Figuren 1 bis 3 im Zusammenwirken mit Werstücken mit unterschiedlichen Querschnitten und Querabmessungen, und

Fig. 6          eine Draufsicht auf ein zweites Ausführungsbeispiel mit einer unterschiedlichen Feststellvorrichtung.

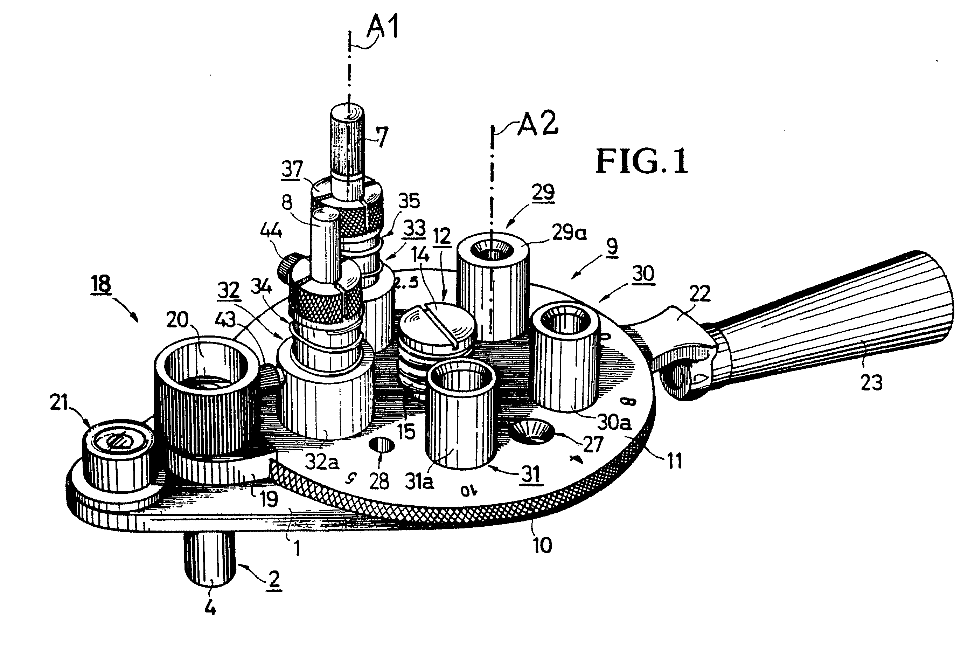

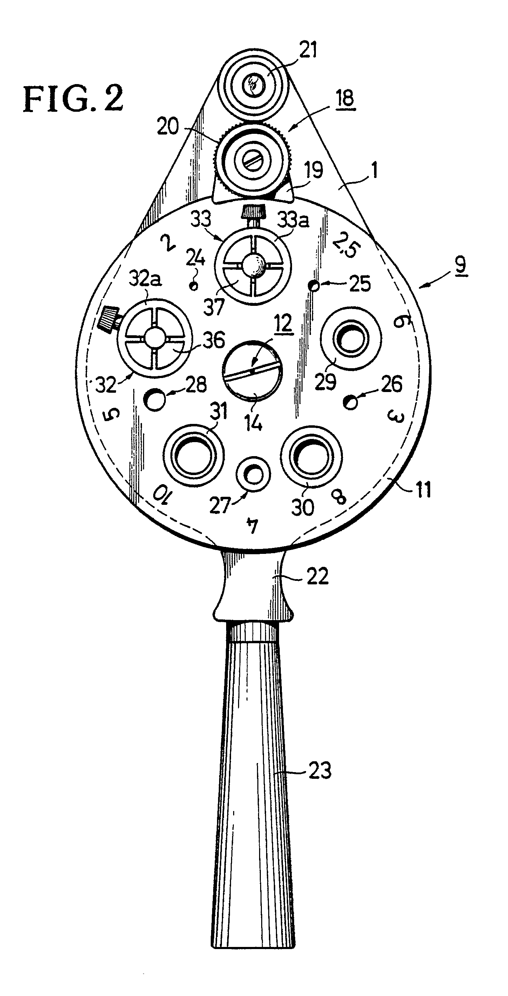

In den Figuren 1 bis 3 ist eine planparallele Grundplatte 1 dargestellt, deren Umriß in der Draufsicht von zwei Kreisbögen unterschiedlichen Durchmessers begrenzt ist, die durch zwei gemeinsame Tangenten miteinander verbunden sind, so daß eine Tropfenform gebildet wird. An dieser Grundplatte 1 sind zwei abstehende Anschläge 2 und 3 in Form zylindrischer Zapfen 4 und 5 befestigt, deren Achsen senkrecht zur Grundplatte 1 bzw. zu deren Hauptebene verlaufen.

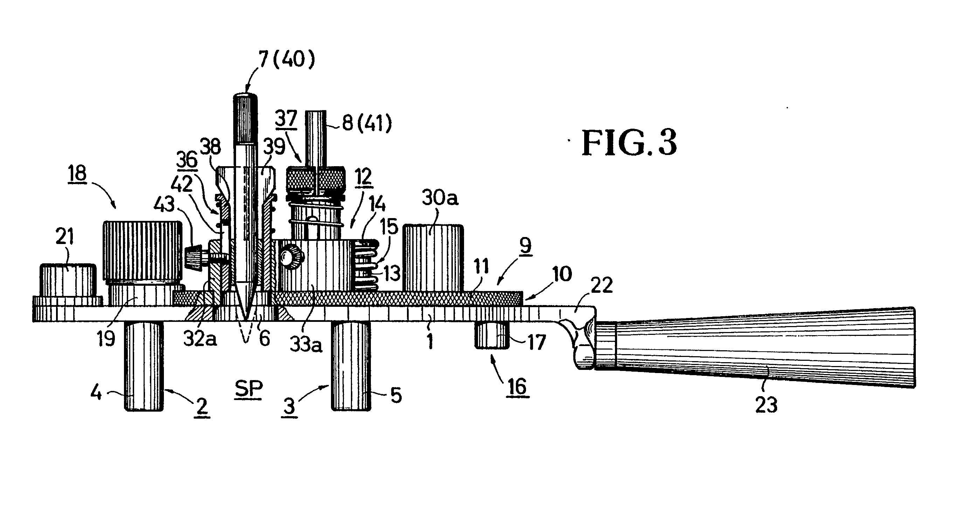

Zwischen den Anschlägen 2 und 3 wird ein Zwischenraum SP für das Einführen der Werkstücke gebildet (Fig. 4 und 5). In der Mitte zwischen den Anschlägen befindet sich in der Grundplatte 1 eine Durchbrechung 6 für das Hindurchführen eines Kennzeichnungswerkzeugs (Zeichenstift 7 oder Anreißstift bzw. Reißnadel 8) oder eines Bearbeitungswerkzeugs (Bohrer, nicht dargestellt). Siehe hierzu insbesondere Figur 3.

Auf der den Anschlägen 2 und 2 gegenüberliegenden Seite der Grundplatte 1 ist drehbar unter flächiger Berührung ein Revolver 9 angeordnet. Wesentlicher Teil des Revolvers 9 ist eine mit einer Rändelung 10 versehene Kreisscheibe 11, deren Durchmesser geringfügig größer ist als der Durchmesser des größeren Kreisbogens der Umrißlinie der Grundplatte 1. Die Grundplatte 1 und der Revolver 9 sind in den Kreismittelpunkten durch ein Drehgelenk 12 miteinander verbunden, zu dem ein Zapfen 13 mit einer Schraube 14 gehört. Eine den Zapfen 13 umgebende vorgespannte Druckfeder 15 stützt sich einerseits an dem Kopf der Schraube 14 und andererseits auf der Kreisscheibe 11 ab. Der Zapfen 13 ist eine Verlängerung des zylindrischen Anschlags 3, der durch die Grundplatte 1 hindurchgeführt ist.

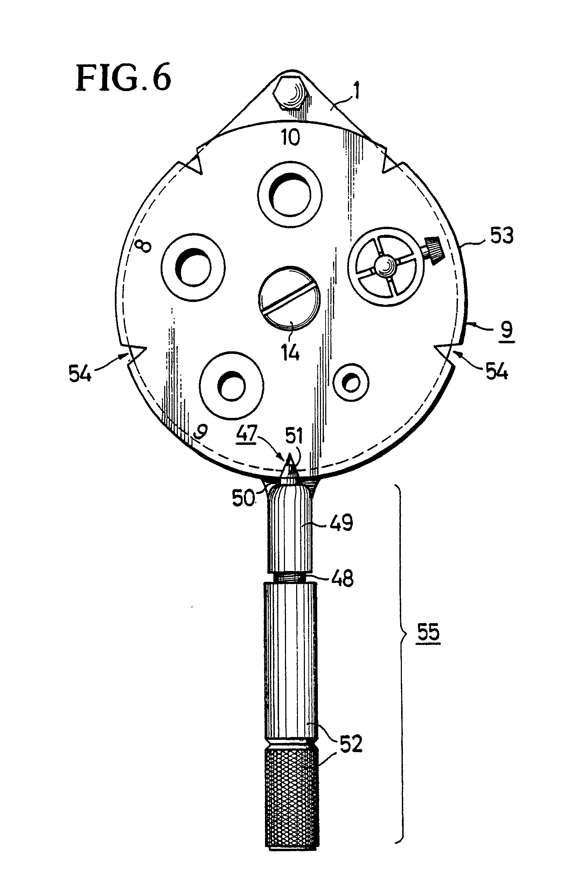

Zwischen der Grundplatte 1 und dem Revolver 9 befindet sich eine Indexier-Einrichtung 16, von der hier nur ein Gehäuse 17 gezeigt ist, in dem sich eine vorgespannte Druckfeder befindet, durch die eine Rastkugel in jeweils eine von mehreren Rastausnehmungen gepreßt wird, die - hier nicht sichtbar - auf

3

einem ersten, zum Drehgelenk 12 konzentrischen, Teilkreis in der von der Grundplatte 1 verdeckten Unterseite der Kreisscheibe 11 angeordnet sind. Dadurch wird erreicht, daß jeweils eine Achse A1 , A2, .... eines Kennzeichnungs-oder Bearbeitungswerkzeugs in Bezug auf die Durchbrechung 6 ausgerichtet werden kann. Einer jeden dieser Achsen A1 , A2, ... ist - auf dem Umfang um 180° versetzt - eine Rastausnehmung zugeordnung, was - in Analogie - anhand der Figur 6 noch näher erläutert wird.

Auf dem über den Umfang der Kreisscheibe 11 hinausragenden Teil der Grundplatte 1 befindet sich eine Feststellvorrichtung 18, die als Klemmbacke 19 ausgeführt ist und die mittels einer gerändelten Spannmutter 20 gegen die Kreisscheibe 11 verspannbar ist, um eine ungewollte Verstellung zu verhindern. Klemmbacke 19 und Spannmutter 20 sind auf einem Gewindebolzen gelagert, der durch eine koaxiale Verlängerung des zylindrischen Anschlags 2 gebildet wird.

Auf der Grundplatte 1 befindet sich ferner eine Libelle 21, mit der die waagrechte Ausrichtung der Grundplatte 1 möglich ist. An der der Feststellvorrichtung 18 gegenüberliegenden Seite der Grundplatte 1 ist eine Verlängerung 22 mit einem radial abstehenden Handgriff 23 befestigt.

Auf einem zweiten, zum Drehgelenk 12 konzentrischen und gegenüber dem ersten Teilkreis kleineren Teilkreis besitzt die Kreisscheibe 11 insgesamt zehn Führungseinrichtungen mit den Achsen A1 , A2, ..., die senkrecht zur Kreisscheibe 11 und zur Grundplatte 1 verlaufen.

Die fünf kleineren dieser Führungseinrichtungen 24, 25, 26, 27 und 28 bestehen aus einfachen, im Durchmesser relativ zueinander abgestuften Bohrungen zum Führen von Spiralbohrern entsprechender Durchmesser. Die eine (27) dieser Bohrungen ist nach oben kegelförmig erweitert, um eine Beobachtung z.B. eines Anreiß- oder Körnungsvorganges zu ermöglichen, wenn diese Bohrung mit der Durchbrechung 6 zur Deckung gebracht wird.

Die fünf größeren dieser Führungseinrichtungen 29, 30, 31, 32 und 33 besitzen zylindrische Führungshülsen 29a, 30a, 31a, 32a und 33a, die fest in die Kreisscheibe 11 eingesetzt sind. Die Führungshülsen 29a, 30a und 31a sind gehärtete Bohrhülsen mit voneinander verschiedenen Innendurchmessern. In den beiden anderen Führungshülsen 32a und 33a befinden sich - gegen die Wirkung vorgespannter Druckfedern 34 und 35 axial verschiebbar gelagert - Spannzangen 36 und 37. Jede dieser Spannzangen besteht aus einer Außenhülse 38 und einer Innenhülse 39, die auf einem Teil ihrer Länge auf dem Umfang vierfach durch radiale Schlitze geschwächt und in federnde Zungen unterteilt ist. Durch Kegelflächen und eine Gewindeverbindung zwischen Innen- und Außenhülse lassen sich die Zungen gegen ein Kennzeichnungswerkzeug 40 (Zeichenstift) bzw. 41 (Anreißstift) verspannen. Die Innendurchmesser der Innenhülsen 39 können infolgedessen unterschiedlich sein.

Radial außerhalb der Führungseinrichtungen für Bohrer befinden sich, in die Kreisscheibe 11 eingraviert, die Angaben über den Bohrerdurchmesser in Millimetern.

In der Außenhülse 38 befindet sich ein axiales Langloch 42, in das eine Anschlagschraube 43 bzw. 44 eingreift, die mittels eines Gewindes radial in der zugehörigen Führungshülse 32a bzw. 33a gelagert ist. Die Einschraubtiefe ist dabei so gewählt, daß die Spannzangen 36 und 37 bei festgezogenen Anschlagschrauben in beiden Richtungen axial begrenzt verschiebbar, nach dem Herausdrehen der Anschlagschrauben aber auswechselbar sind (Figur 3 erläutert diese Zusammenhänge).

Wenn man bei einer Einstellung des Werkzeugs gemäß Figur 3 auf das Kennzeichnungswerkzeug 41 drückt oder schlägt, dann bewegt sich dieses zusammen mit der Spannzange 36 gegen die Wirkung der Druckfeder 34 in die gestrichelte Stellung. Wenn sich dort ein Werkstück befindet, erfolgt entweder eine Kennzeichnung (Markierung) oder Ankörnung. In dem zuerst genannten Fall kann die Kennzeichnung durch Längsverschiebung des Werkzeugs über die geradlinige Länge des Werkstücks augedehnt werden.

Figur 4 zeigt die Wirkungsweise des Werkzeugs an einem Werkstück 45 (strichpunktiert), das als Rohr (oder Vollzylinder) ausgebildet ist. Dieses liegt nach dem maximal möglichen Verschwenken des Werkzeugs an den Anschlägen 2 und 3 an, und zwar auf zwei Punkten P1 und P2, die auf zwei Berührungslinien (Mantellinien) der Vorsprünge 2 und 3 liegen. Man kann sich diese Punkte P1 und P2 durch eine gerade Strecke miteinander verbunden denken. Die Achse A1 bzw. A2 der zugehörigen Führungseinrichtung bzw. des betreffenden Kennzeichnungs-oder Bohrwerkzeugs geht dann einerseits genau durch den Mittelpunkt dieser Strecke, ist aber andererseits auch genau auf die Mittenachse MA des Werkstücks ausgerichtet. Jeder Anreißvorgang erfolgt jetzt genau achsparallel bzw. mittig, und jeder Bohrvorgang in genau radialer Richtung.

Figur 5 zeigt die Wirkungsweise des Werkzeugs an einem relativ schmaleren Werkstück 46, das als scharfkantiges U-Profil ausgebildet ist. Der Winkel zwischen der Werkstückachse und der geraden Verbindungslinie zwischen den Anschlägen ist entsprechend spitzer, sonst ändert sich aber nichts an der Funktionsweise der Vorrichtung außer der Tatsache, daß an den zu P1 und P2 analogen Stellen der Anschläge 2 und 3 jeweils eine linienförmige Berührung vorliegt.

Aus den Figuren 4 und 5 ist auch ersichtlich, daß nur die einander zugewandten bzw. in Sichtverbindung miteinander stehenden Oberflächen der Anschläge 2 und 3 zylindrisch (bzw. prismatisch) sein müssen, d.h. alle möglichen Mantellinien der Anschläge, gegen die die Werkstücke zur Anlage kommen können, müssen exakt senkrecht zur Hauptebene der Grundplatte verlaufen, und die Anordnung muß in bezug auf die besagten Achsen A1 , A2, A3, ... exakt spiegelsymmetrisch sein.

Aus den Figuren 4 und 5 ist weiterhin zu entnehmen, daß der lichte Abstand der Anschläge 2 und 3 den Querabmessungen des größtmöglichen infrage kommenden Werkstücks und deren Länge der Höhe des Werkstücks entsprechen muß.

Bei dem Ausführungsbeispiel nach Figur 6 ist eine anders ausgebildete Feststellvorrichtung 47 vorhanden, die gleichzeitig auch als Indexier-Einrichtung dient. Die Feststellvorrichtung weist eine radial ausgerichtete Gewindespindel 48 auf, die in einer Spindelmutter 49 gelagert ist. Die Spindelmutter 49 ist ihrerseits an einem radialen Vorsprung 50 der Grundplatte 1 befestigt. Die Gewindespindel 48 trägt an ihrem radal einwärts gelegenen Ende einen zur Spindelachse koaxialen kegelstumpfförmigen Formkörper 51 und an ihrem radial auswärts gelegenen Ende einen Drehknopf 52 zum Antrieb der Gewindespindel 48.

Der Revolver 9, der hier nur insgesamt fünf Führungseinrichtungen aufweist, ist an seinem Rand 53 mit ebenfalls fünf V-förmigen Ausnehmungen 54 versehen, die in einer genauen Winkelbeziehung zur jeweiligen Führungseinrichtung stehen, und zwar derart, daß die Achsen A1, A2, ... genau mittig zwischen den Anschlägen 2 und 3 feststellbar sind. Im vorliegenden Fall sind die Ausnehmungen 54 um genau 180° versetzt zu der zugehörigen Führungseinrichtung angeordnet.

Der Öffnungswinkel der Ausnehmungen 54 ist dabei genau so groß wie derjenige des Formkörpers 51, so daß dieser spielfrei in die jeweilige Ausnehmung einführbar ist. Dies macht es erforderlich, daß die gemeinsame Achse von Gewindespindel 48 und Formkörper 51 in der winkelhalbierenden Ebene des "V" der jeweils ausgewählten Ausnehmung 54 liegt.

Die Anordnung der Ausnehmungen 54 und der Gewindespindel 48 mit dem Formkörper 51 kann auch vertauscht werden, d.h. die Grundplatte erhält die entsprechenden Ausnehmungen, und die Gewindespindel wird dem Revolver zugeordnet. Das Beispiel nach Figur 6 ermöglich jedoch eine besonders günstige Anordnung des Handgriffs 55.

Der Ausdruck "geradlinig" in bezug auf die Werkstücke 45 und 46 besagt, daß die Werkstückachse wenigstens in demjenigen Bereich, in dem das Werkzeug zur Anwendung bzw. Anlage kommt, eine gerade Achse aufweist.

## Patentansprüche

1. Handwerkzeug zum Kennzeichnen und/oder Bearbeiten von geradlinigen Werkstücken konstanten Querschnitts, gekennzeichnet durch:

   a) eine Grundplatte (1) mit zwei davon abstehenden Anschlägen (2 und 3) mit zur Grundplatte senkrecht stehenden und zueinander parallelen Berührungslinien für das Werkstück (45, 46), zwischen denen ein Zwischenraum (SP) für das Einführen des Werkstücks vorhanden ist, und mit einer mittig zwischen den Berührungslinien angeordnete Durchbrechung (6) für das Durchführen eines Kennzeichnungs- (7, 8) und/oder Bearbeitungswerkzeuges (Bohrer), und durch

   b) einen mit der Grundplatte (1) auf der den Anschlägen (2 und 3) gegenüberliegenden Seite durch ein Drehgelenk (12) und eine Indexier-Einrichtung (16) verbundenen Revolver (9), der auf einem zum Drehgelenk konzentrischen Teilkreis mindesten zwei Führungseinrichtungen (24, 25, 26, 27, 28, 29, 30, 31, 32, 33) mit zur Grundplatte senkrechten Achsen (A1, A2, ....) aufweist, die im Bereich der Durchbrechung (6) in der Mitte zwischen den Berührungslinien stillsetzbar sind und in die jeweils ein Kennzeichnungs- (7, 8) und/oder Bearbeitungswerkzeug (Bohrer) einsetzbar ist.

2. Handwerkzeug nach Anspruch 1, dadurch gekennzeichnet, daß in mindestens eine der Führungseinrichtungen (24, 25, 26, 27, 28, 29, 30, 31, 32, 33) ein Zeichenstift (7) eingesetzt ist.

3. Handwerkzeug nach Anspruch 1, dadurch gekennzeichnet, daß in mindestens einer der Führungseinrichtungen (24, 25, 26, 27, 28, 29, 30, 31 , 32, 33) ein Anreißstift (8) eingesetzt ist.

4. Handwerkzeug nach Anspruch 1, dadurch gekennzeichnet, daß in mindestens eine der Führungseinrichtungen (24, 25, 26, 27, 28, 29, 30, 31, 32, 33) ein Körner eingesetzt ist.

5. Handwerkzeug nach Anspruch 1, dadurch gekennzeichnet, daß mindestens eine der Führungseinrichtungen (29, 30, 31) als Bohrhülse (29a, 30a, 31a) ausgeführt ist.

6. Handwerkzeug nach Anspruch 1, dadurch gekennzeichnet, daß die als Bohrerführungen ausgebildeten Führungseinrichtungen (29, 30, 31) abgestufte Innendurchmesser ausfweisen.

7. Handwerkzeug nach Anspruch 1, dadurch gekennzeichnet, daß in der mindestens einen Führungseinrichtung (32, 33) für den Zeichenstift (7) und/oder für den Anreißstift (8) eine axial verschiebbare Spannzange (36, 37) für die Halterung des jeweiligen Stiftes gelagert ist.

8. Handwerkzeug nach Anspruch 7, dadurch gekennzeichnet, daß die Spannzange (36, 37) gegen die Wirkung einer Druckfeder (34, 35) in Richtung auf die Grundplatte (1) verschiebbar ist.

9. Handwerkzeug nach Anspruch 7, dadurch gekennzeichnet, daß die Spannzange (36, 37) auswechselbar in ihrer Führungseinrichtung (32, 33) gelagert ist.

10. Handwerkzeug nach Anspruch 1, dadurch gekennzeichnet, daß der Revolver (9) durch eine, einen Zapfen (13) der Drehlagerung (12) umgebende Druckfeder (15) gegen die Grundplatte (1) vorgespannt ist.

11. Handwerkzeug nach Anspruch 1, dadurch gekennzeichnet, daß ein die Drehlagerung (12) bildender Zapfen (13) über die Unterseite der Grundplatte (1) verlängert ist und einen der Anschläge (3) bildet.

12. Handwerkzeug nach Anspruch 1, dadurch gekennzeichnet, daß zwischen Grundplatte (1) und Revolver (9) eine Feststellvorrichtung (18, 47) angeordnet ist.

13. Handwerkzeug nach Anspruch 12, dadurch gekennzeichnet, daß die Feststellvorrichtung (18) eine verspannbare Klemmbacke (19) aufweist, durch die der Revolver (9) an die Grundplatte (1) anpreßbar ist.

14. Handwerkzeug nach Anspruch 12, dadurch gekennzeichnet, daß die Feststellvorrichtung (47) eine Gewindespindel (48) mit einem Formkörper (51) aufweist, der mittels der Gewindespindel (48) spielfrei in jeweils eine, einer jeden Führungseinrichtung zugeordnete Ausnehmung (54) des jeweils anderen Teils (Grundplatte (1) oder Revolver (9)) einführbar ist.

15. Handwerkzeug nach Anspruch 14, dadurch gekennzeichnet, daß die Gewindespindel (48) in einer an der Grundplatte (1) befestigten Spindelmutter (49) gelagert ist und mit ihrem Formkörper (51) in jeweils eine von mehreren Ausnehmungen (54) am Rande (53) des Revolvers (9) einführbar ist.

16. Handwerkzeug nach Anspruch 15, dadurch gekennzeichnet, daß die gemeinsamen Achsen von Gewindespindel (48) und Spindelmutter (49) radial zur Achse der Drehlagerung (12) verlaufen und daß der Formkörper (51) der Gewindespindel (48) kegelstumpfförmig und die Ausnehmungen (54) in der Draufsicht auf den Revolver (9) "V"-förmig ausgebildet sind, wobei die gemeinsame Achse von Gewindespindel (48) und Formkörper (51) in der winkelhalbierenden Ebene des "V" der jeweils zugehörigen Ausnehmung (54) liegt.

17. Handwerkzeug nach Anspruch 1, dadurch gekennzeichnet, daß die Grundplatte (1) mit einem Handgriff (23, 55) versehen ist.

18. Handwerkzeug nach den Ansprüchen 16 und 17, dadurch gekennzeichnet, daß der Handgriff (55) radial zur Achse der Drehlagerung (12) an der Grundplatte (1) befestigt ist und die Gewindespindel (48) und deren Drehknopf (52) enthält.

19. Handwerkzeug nach Anspruch 1, dadurch gekennzeichnet, daß an der Grundplatte (1) eine Libelle (21) für die waagrechte Ausrichtung der Grundplatte befestigt ist.

20. Lehre nach Anspruch 1, dadurch gekennzeichnet, daß die Anschläge (2, 3) als zylindrische Zapfen (4, 5) ausgebildet sind, deren Achsen parallel zueinander und zur Achse des Drehlagers (12) und senkrecht zur Hauptebene der Grundplatte (1) verlaufen.

FIG.1

EP 0 439 746 A1

# FIG. 2

EP 0 439 746 A1

**FIG.3**

FIG.4

FIG. 5

# FIG.6

**Europäisches Patentamt**

# EUROPÄISCHER RECHERCHENBERICHT

Nummer der Anmeldung

**EP 90 12 3917**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | US-A-2 050 709  (LOPEZ) <br> * Figuren 4, 5 * | 1,5,12, 2-4,6-9, 14-17,19, 20 | B 25 <br> H 1/00 <br> B 25 H 7/00 <br> B 23 B 47/28 |
| X,Y | US-A-4 461 603  (KLEE ET AL) <br> * Figuren 1-5 * | 1,5,12, 2-4,6-9, 14-17,19, 20 | |
| Y | EP-A-0 347 922  (HADDEN) <br> * Figuren 1, 5 * | 1,5,12, 14-16,20 | |
| Y | US-A-3 874 810  (RUSSELL) <br> * Figur 3 * | 1,5,12, 14-16,20 | |
| Y | EP-A-0 337 170  (THE BOEING COMPANY) <br> * Zusammenfassung; Figuren 1-4 * | 1,5,12, 14-16 | |
| Y | US-A-3 138 975  (SAYE) <br> * Figur 3 * | 1,5,12, 14-16 | |
| Y | US-A-2 160 274  (LOPEZ) <br> * Figur 4 * | 1,5,12, 14-16 | RECHERCHIERTE SACHGEBIETE (Int. Cl.5) <br> B 25 H <br> B 23 <br> B <br> B 23 Q |
| Y | US-A-2 482 360  (MOORE) <br> * Figuren 3, 4 * | 2-4,19 | |
| Y | DE-A-2 503 490  (PSCHOLKA) <br> * Figuren 1, 2 * | 2-4,19 | |
| Y | US-A-4 466 193  (ASTLE) <br> * Figur 2 * | 7-9 | |

–/–

Der vorliegende Recherchenbericht wurde für alle Patentansprüche erstellt

| Recherchenort | Abschlußdatum der Recherche | Prüfer |
|---|---|---|
| Den Haag | 25 April 91 | CARMICHAEL D.G. |

Europäisches
Patentamt

**EUROPÄISCHER
RECHERCHENBERICHT**

Nummer der Anmeldung

**EP 90 12 3917**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 408 440 (WOLFF)<br>* Figuren 1-3, 10-17 *<br>– – – | 6,17 | |
| A | US-A-2 764 818 (GARD)<br>* Figur 1 *<br>– – – | 1,2 | |
| A | DE-A-1 652 698 (KRAUS)<br>* Figur 3 *<br>– – – | 1 | |
| A | US-A-2 783 665 (SAUNDERS)<br>* Figuren 1, 2 *<br>– – – | 1 | |
| A | US-A-4 375 341 (SCHULZE)<br>* das ganze Dokument *<br>– – – | 1 | |
| A | US-A-1 329 970 (HAUSER)<br>– – – | | |
| A | FR-A-2 170 418 (THE STANLEY WORKS)<br>– – – | | |
| A | US-A-2 834 116 (HAMBRICK)<br>– – – – – | | |

**RECHERCHIERTE SACHGEBIETE (Int. Cl.5)**

**Der vorliegende Recherchenbericht wurde für alle Patentansprüche erstellt**

| Recherchenort | Abschlußdatum der Recherche | Prüfer |
|---|---|---|
| Den Haag | 25 April 91 | CARMICHAEL D.G. |

**KATEGORIE DER GENANNTEN DOKUMENTE**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
---------------------------------------------------------------
& : Mitglied der gleichen Patentfamilie, übereinstimmendes Dokument